Europäisches Patentamt

European Patent Office

Office européen des brevets

(11) Numéro de publication : **0 435 747 A1**

# (12) DEMANDE DE BREVET EUROPEEN

(21) Numéro de dépôt : **90403675.3**

(51) Int. Cl.⁵ : **B23K 26/06**

(22) Date de dépôt : **19.12.90**

(30) Priorité : **28.12.89 FR 8917377**

(43) Date de publication de la demande :
**03.07.91 Bulletin 91/27**

(84) Etats contractants désignés :
**BE CH DE ES LI**

(71) Demandeur : **FRAMATOME**
**Tour Fiat 1, Place de la Coupole**
**F-92400 Courbevoie (FR)**

(72) Inventeur : **Vignes, Alain**
**4 Place Violet**
**F-75015 Paris (FR)**
Inventeur : **Griffaton, Jacques**
**6 Rue Saint Georges**
**F-71100 Chalon S/Saone (FR)**

(74) Mandataire : **Jacobson, Claude et al**
**Cabinet Lavoix 2, Place d'Estienne d'Orves**
**F-75441 Paris Cedex 09 (FR)**

(54) **Tête de travail au laser à l'intérieur d'un tube.**

(57) L'enveloppe tubulaire (3) de la tête de travail (1) présente deux fenêtres, amont (4) et aval (5), en regard de chacune desquelles est monté un miroir de renvoi, respectivement un miroir (12) partiellement réfléchissant et un miroir (14) totalement réfléchissant. Un premier dispositif optique de focalisation (8) est monté devant le miroir amont, et un deuxième dispositif optique de focalisation (13) est monté entre le miroir aval et le foyer image (11) du dispositif optique amont.

Application à la réalisation simultanée de plusieurs soudures circulaires dans des tubes de faible diamètre.

EP 0 435 747 A1

FIG.1

# TETE DE TRAVAIL AU LASER A L'INTERIEUR D'UN TUBE

La présente invention est relative à une tête de travail au laser à l'intérieur d'un tube. Elle s'applique en particulier à la réalisation de soudures circulaires dans des tubes de faible diamètre, par exemple pour la fixation étanche ou le manchonnage des tubes des générateurs de vapeur des réacteurs nucléaires à eau pressurisée.

Dans la technique actuelle (voir par exemple la demande de brevet FR-88 13 602 au nom de la Demanderesse), un faisceau laser est transporté, par exemple par fibre optique, jusqu'à un miroir incliné de renvoi précédé d'un dispositif optique de focalisation. Le faisceau focalisé sort de la tête de travail par une fenêtre latérale de celle-ci, et l'on fait tourner la tête sur un tour complet pour réaliser une soudure circulaire.

Les travaux à réaliser intéressent fréquemment plusieurs zones de travail circulaires espacées axialement les unes des autres. Il est alors nécessaire de répéter à plusieurs reprises les opérations de positionnement et de réglage de la tête de travail.

L'invention a pour but de réaliser des travaux multiples en un temps beaucoup plus reduit.

A cet effet, la tête de travail au laser suivant l'invention comprend :
— une enveloppe tubulaire présentant une fenêtre aval et au moins une fenêtre amont, ces fenêtres étant espacées axialement les unes des autres ;
— en regard de la fenêtre aval, un miroir aval de renvoi, incliné et totalement réfléchissant ;
— en regard de la ou de chaque fenêtre amont, un miroir amont de renvoi, incliné et partiellement refléchissant ;
— en amont de chaque miroir, un dispositif optique de focalisation du faisceau laser sur une zone de travail située au droit de la fenêtre correspondante ;
— chaque dispositif optique étant disposé entre le miroir associé et le foyer image du dispositif optique situé immédiatement en amont.

Quelques exemples de réalisation de l'invention vont maintenant être décrits en regard des dessins annexés, sur lesquels :
— la Fig. 1 représente schématiquement, en coupe longitudinale, une tête de travail au laser conforme à l'invention ;
— la Fig. 2 est une vue analogue, à plus petite échelle, d'une variante ; et
— la Fig. 3 est une vue analogue, à plus grande échelle, d'une autre variante.

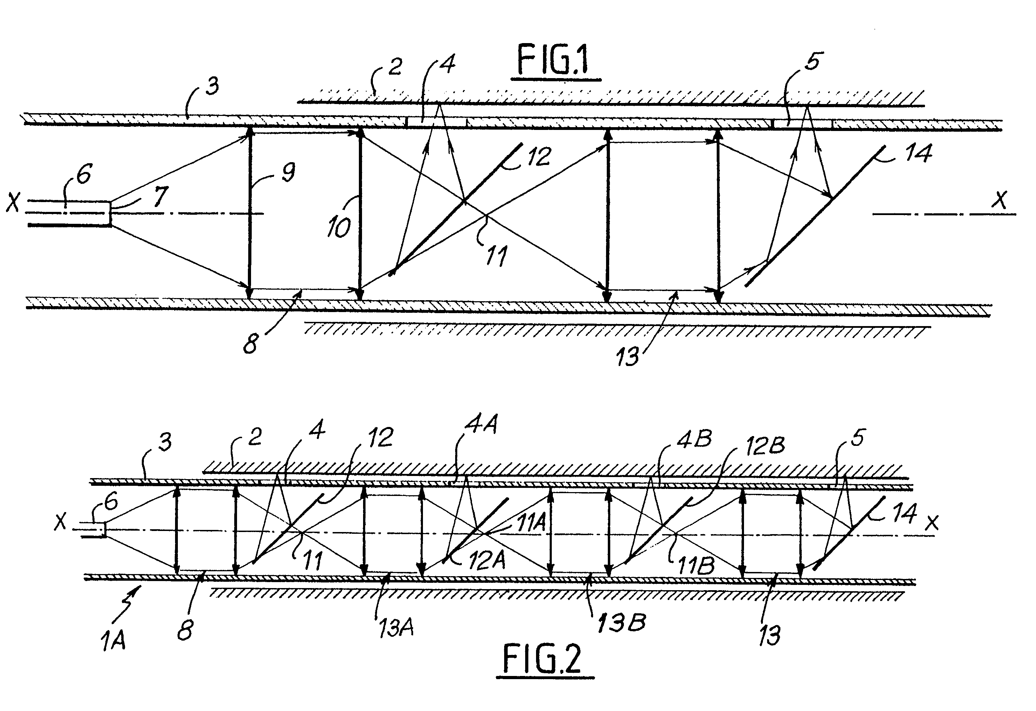

On n'a représenté à la Fig. 1 que la partie aval d'une tête de soudage au laser 1, dont la structure générale peut être celle décrite dans la demande de brevet français précitée. Cette tête 1 est destinée à réaliser simultanément deux soudures circulaires dans un tube 2 dont le diamètre intérieur est légèrement supérieur au diamètre extérieur de l'enveloppe extérieure cylindrique 3 de la tête 1. Il peut s'agir notamment de fixer par soudage un manchon de réparation dans un tube, suivant la technique couramment utilisée pour l'entretien des tubes d'eau primaire des générateurs de vapeur des réacteurs nucléaires à eau pressurisée.

L'enveloppe 3 présente, sur une même génératrices, deux fenêtres de sortie de faisceaux laser, à savoir une fenêtre amont 4 et une fenêtre aval 5. Les axes de ces fenêtres ont entre eux le même espacement axial (c'est-à-dire suivant l'axe général X-X de l'ensemble) que les deux soudures à réaliser, et la tête 1 est positionnée et centrée de façon correspondante dans le tube 2, par des moyens classiques non représentés.

La partie de la tête 1 qui est illustrée à la Fig. 1 comprend dans l'enveloppe 3, d'amont vers l'aval :
— une fibre optique 6 qui émet le faisceau laser de départ par son extrémité aval 7, centrée sur l'axe X-X ;
— un premier dispositif optique 8 de focalisation, comprenant au moins deux lentilles convergentes 9 et 10 ;
— entre le dispositif 8 et son foyer image 11, un miroir semi-réfléchissant 12 incline à 45°, adapté pour envoyer 50% du faisceau focalisé vers la zone de travail amont du tube 2, à travers la fenêtre 4, le reste du faisceau n'étant pas dévié et étant focalisé au foyer 11 ;
— un second dispositif optique 13 analogue au dispositif 8, disposé en aval du foyer 11 ; et
— un second miroir de renvoi 14 incliné à 45°, totalement réfléchissant, qui renvoie la partie du faisceau non déviée par le miroir 12, focalisée par le dispositif optique 13, vers la zone de travail aval du tube 2, à travers la fenêtre 5.

Le fonctionnement de la tête 1 se déduit directement de la description qui précède : un faisceau laser dont l'énergie est double de celle nécessaire pour réaliser une soudure est véhiculé par la fibre optique 6, 50% de ce faisceau est focalisé sur chaque zone de travail, et, en faisant tourner la tête 1 sur un tour complet autour de l'axe X-X, on réalise simultanément les deux soudures circulaires desirées.

La variante 1A de la Fig. 2 est destinée à réaliser simultanément d'une façon analogue un nombre de soudures circulaires supérieur à d'eux, égal à quatre dans l'exemple représenté. Elle diffère de celle de la Fig. 1 par le fait que l'enveloppe 3 présente deux fenêtres supplémentaires 4A, 4B entre les fenêtres 4 et 5, sur la même génératrice. Un miroir partiellement réfléchissant 12A, 12B, incliné à 45°, est disposé en regard de chacune de ces fenêtres, et un dispositif optique de focalisation 13A, 13B est disposé devant chacun de ces miroirs. Plus précisément, chaque dispositif optique 13A, 13B et 13 est disposé entre le miroir situé immédiatement en aval, 12A, 12B et 14 respectivement, et le foyer image, 11, 11A, 11B respectivement, du dispositif optique situé immédiatement en amont, 8, 13A, 13B respectivement.

Dans le cas de la Fig. 2, le pourcentage d'énergie lumineuse réfléchie par chaque miroir est calculé pour que chaque zone de travail reçoive la même énergie, soit : 100/4% pour le miroir 12, 100/3% pour le miroir 12A, et 100/2% pour le miroir 12B. Plus généralement, dans le cas de (n-1) miroirs partiellement réfléchissants montés l'un derrière l'autre, ces miroirs doivent réfléchir respectivement, d'amont en aval 100/n%, 100/(n-1)%, 100(n-2)%, ..., 100/2% de l'énergie du faisceau de départ. Dans tous les cas, l'énergie de ce faisceau de départ est bien entendu égale à n fois l'énergie nécessaire pour réaliser une soudure.

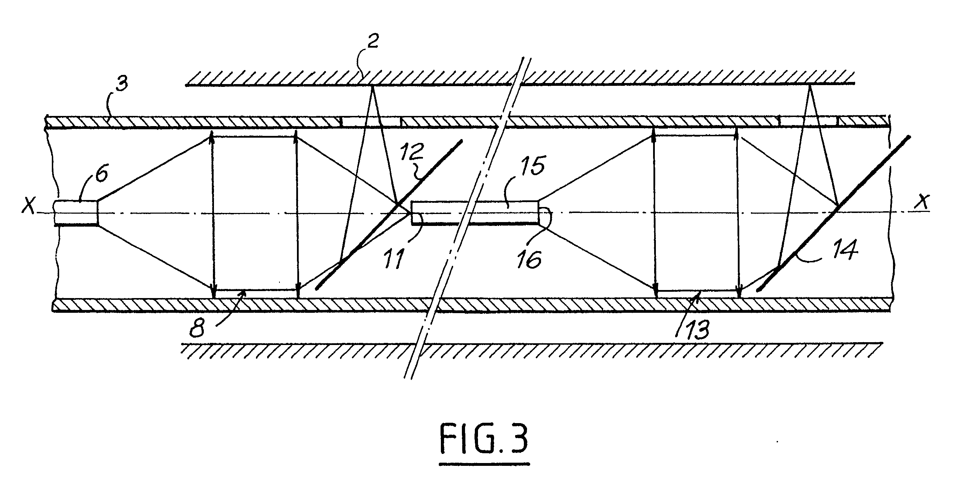

Dans les agencements des Fig. 1 et 2, les caractéristiques optiques des dispositifs optiques de focalisation sont choisis en fonction de l'entr'axe des fenêtres 4 et 5, ou 4, 4A, 4B et 5, de façon que le foyer image de chaque dispositif optique soit en même temps le foyer objet du dispositif optique suivant. Si cette condition ne peut être remplie, notamment à cause d'une trop grande distance entre les zones de travail, on peut utiliser avantageusement la variante de la Fig. 3, dans laquelle, avec seulement deux fenêtres 4 et 5, une fibre optique 15 s'étend le long de l'axe X-X du foyer image 11 du dispositif optique 8 au foyer objet 16 du dispositif optique 13. Cette variante peut bien entendu s'adapter au cas de la tête à miroirs multiples de la Fig. 2.

On remarque que chaque miroir intercepte obliquement un faisceau laser non encore focalise, intéressant par conséquent une aire importante du miroir. On évite ainsi tout risque d'échauffement localisé excessif des miroirs.

En variante, les fenêtres de sortie des faisceaux laser pourraient se trouver sur des génératrices différentes de la tête de travail. Les miroirs correspondants seraient alors tournés les uns par rapport aux autres autour de l'axe X-X.

**Revendications**

1. Tête de travail au laser à l'intérieur d'un tube, caractérisée en ce qu'elle comprend :
   – une enveloppe tubulaire (3) présentant une fenêtre aval (5) et au moins une fenêtre amont (4 ; 4, 4A, 4B), ces fenêtres étant espacées axialement les unes des autres ;
   – en regard de la fenêtre aval, un miroir aval (14) de renvoi, incliné et totalement réfléchissant ;
   – en regard de la ou de chaque fenêtre amont, un miroir amont de renvoi (12 ; 12, 12A, 12B), incliné et partiellement réfléchissant ;
   – en amont de chaque miroir, un dispositif optique (8, 13 ; 8, 13, 13A, 13B) de focalisation du faisceau laser sur une zone de travail située au droit de la fenêtre correspondante ;
   – chaque dispositif optique étant disposé entre le miroir associé et le foyer image du dispositif optique situé immédiatement en amont.

2. Tête de travail suivant la revendication 1, caractérisée en ce que tous les miroirs (12, 14 ; 12, 12A, 12B, 14) sont inclinés à 45°.

3. Tête de travail au laser suivant l'une des revendications 1 ou 2, caractérisée en ce que tous les miroirs (12, 14 ; 12, 12A, 12B, 14) sont sensiblement parallèles.

4. Tête de travail au laser suivant l'une des revendications 1 ou 2, caractérisée en ce que les miroirs sont tournés les uns par rapport aux autres autour de l'axe (X-X) de la tête, les fenêtres associées étant prévues sur des génératrices différentes de celle-ci.

5. Tête de travail au laser suivant l'une quelconque des revendications 1 à 4, caractérisé en ce que le foyer objet (11 ; 11, 11A, 11B) de chaque dispositif optique est constitué par le foyer image du dispositif optique situé immédiatement en amont.

6. Tête de travail au laser suivant l'une quelconque des revendications 1 à 4, caractérisée en ce qu'une fibre optique (15) s'étend du foyer image (11) d'un dispositif optique (8) au foyer objet (16) du dispositif optique (13) situé immédiatement en aval.

FIG.1

FIG.2

FIG.3

EP 0 435 747 A1

Office européen
des brevets

# RAPPORT DE RECHERCHE EUROPEENNE

Numero de la demande

EP    90 40 3675

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-298374 (WESTINGHOUSE ELECTRIC CORPORATION) * le document en entier * --- | 1, 2, 5 | B23K26/06 |
| A | GB-A-2101029 (HAUNI-WERKE KORBER AND CO KG) * page 2, lignes 85 - 109; figure 1 * ----- | 1-3 | |
| | | | DOMAINES TECHNIQUES RECHERCHES (Int. Cl.5 ) |
| | | | B23K |

Le présent rapport a été établi pour toutes les revendications

| Lieu de la recherche | Date d'achèvement de la recherche | Examinateur |
|---|---|---|
| LA HAYE | 03 AVRIL 1991 | ARAN D. D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

......................................................................
& : membre de la même famille, document correspondant

EPO FORM 1503 03.82 (P0402)

7